Europäisches Patentamt

European Patent Office

Office européen des brevets

(19)

(11) Numéro de publication: **0 055 186**
A1

(12)

# DEMANDE DE BREVET EUROPEEN

(21) Numéro de dépôt: **81402055.8**

(22) Date de dépôt: **22.12.81**

(51) Int. Cl.³: **A 01 D  87/08**, A 01 D  87/00,
B 66 F  9/065

(30) Priorité: **23.12.80  FR 8027331**

(43) Date de publication de la demande: **30.06.82**
**Bulletin 82/26**

(84) Etats contractants désignés: **AT BE CH DE FR GB IT LI
LU NL SE**

(71) Demandeur: **S.A. AUDUREAU Société dite:, La
Copechagniere, F-85260 L'Herbergement (Vendée) (FR)**

(72) Inventeur: **Audureau, Bernard, Route de Nantes,
F-85620 Rocheserviere (FR)**

(74) Mandataire: **Chevallier, Robert et al, Cabinet
BOETTCHER 23, rue La Boétie, F-75008 Paris (FR)**

(54) ´Appareil de manutention de ballots ou objets à gerber.

(57) Appareil de manutention de ballots ou objets à gerber.
Une flèche (1) articulée en (11) sur un tracteur (9) est équipée d'un organe preneur (3) qui est relié par l'intermédiaire d'un dispositif inclinable et élévateur (2), constitué de préférence par un parallélogramme articulé, à un bras basculeur (28) monté pivotant autour d'un axe (16) à l'extrémité de la flèche (1).

EP 0 055 186 A1

ACTORUM AG

Appareil de manutention de ballots ou objets à gerber.

L'invention a pour objet un appareil de manutention de ballots ou d'objets à gerber portable par un chariot ou par un tracteur, comprenant une flèche mobile en inclinaison autour d'un axe horizontal depuis le voisinage du sol jusqu'à une position élevée.

Le but de l'invention est d'apporter des perfectionnements aux appareils de manutention du type rappelé ci-dessus de façon à les rendre aptes au gerbage et au dégerbage sur de très grandes différences de hauteur. L'invention est plus particulièrement utile pour le gerbage et le dégerbage de balles de paille ou de fourrage de 500 ou 1000 kg dont l'emploi se généralise et qu'on ne peut pas gerber sur de grandes hauteurs.

L'état de la technique dans ce domaine est bien illustré par le brevet britannique n° 2 048 820 qui décrit un appareil se montant sur un tracteur et comprenant une flèche pivotante autour d'un axe horizontal, un bâti monté à l'extrémité de cette flèche pour basculer autour d'un axe horizontal, un organe preneur équipe ce bâti sur son côté opposé à la flèche et se compose d'une pince à deux branches opposées et incurvées.

Selon l'invention, un premier perfectionnement appréciable que l'on peut apporter à cet appareil consiste à interposer entre un bras basculeur et l'organe porteur un dispositif inclinable supplémentaire articulé au moins sur le bras basculeur.

De cette façon, on peut, non seulement gagner sur la hauteur de service de l'engin, mais si, comme il est courant, l'angle d'inclinaison de la flèche et l'angle d'inclinaison du dispositif inclinable sont chacun au moins égaux à 45°, on obtient la possibilité de gerber un objet à volonté, soit parallèlement, soit à 90°, par rapport à sa position au sol, sur un véhicule, sur un transporteur, sur un autre tas, etc., et inversement de le déposer après dégerbage dans le même sens ou basculé à 90° par rapport à

2    0055186

sa position en tas. C'est pourquoi il est préférable que l'axe de pivotement en inclinaison du dispositif inclinable soit parallèle à l'axe horizontal d'inclinaison de la flèche.

Il est avantageux, selon un mode de réalisation de l'invention, de prévoir que le dispositif inclinable est aussi un dispositif élévateur.

A cette fin, il est spécialement approprié d'utiliser un parallélogramme déformable, connu en soi, articulé à la fois sur le bras basculeur et sur l'organe preneur afin que la charge puisse être élevée parallèlement à elle-même par suite de l'inclinaison du dispositif.

Selon un mode de réalisation particulier de l'invention l'organe preneur est un dispositif à mâchoires, sans pour autant exclure d'autres modes de réalisation, tels que les dispositifs à fourches ou autres. De préférence, le dispositif à mâchoires comporte un axe d'articulation parallèle à l'axe horizontal de pivotement en inclinaison du dispositif inclinable et élévateur, sans pour autant exclure un axe d'articulation perpendiculaire. Toujours selon un mode de réalisation particulier de l'invention, le dispositif à mâchoires est un dispositif à griffes mutuellement perpendiculaires dans une des positions intermédiaires d'ouverture des mâchoires, mais cette variante préférée n'exclut pas d'autres variantes, telles que les moyens à pinces à axe horizontal ou à axe vertical permettant de saisir latéralement les ballots ou objets.

D'autres caractéristiques et avantages ressortiront de la description donnée ci-après uniquement à titre d'exemple sans intention limitative, d'un mode de réalisation de l'invention. On se reportera à cet effet aux dessins annexés, dans lesquels :

- la figure 1 est une vue de l'avant en perspective d'un appareil selon l'invention monté à l'avant d'un tracteur agricole,

- la figure 2 est une vue de côté du même appareil en position de prise au sol,

- la figure 3 est une vue de côté du même appareil en position de flèche levée sans élévation de l'organe preneur porté par le dispositif inclinable et élévateur, le bras basculeur étant représenté à chacune de ses deux positions extrêmes d'inclinaison ,

- la figure 4 est une vue analogue à la figure 3 montrant une position intermédiaire et les deux positions extrêmes possibles du dispositif inclinable et élévateur.

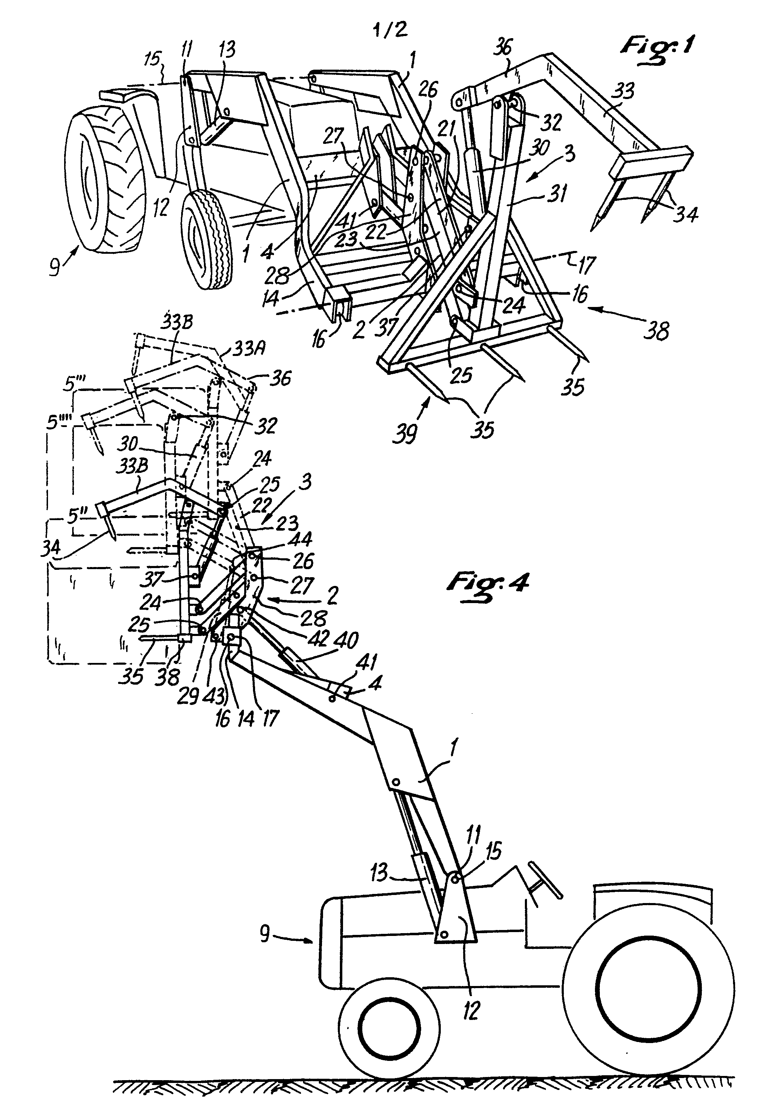

Un appareil selon l'invention est monté sur un tracteur 9. Il comprend, dans son ensemble, une double flèche coudée 1 pouvant pivoter autour d'un axe 15 aux sommets 11 de deux supports 12 portés par le châssis du tracteur 9 autour d'un axe horizontal transversal à ce dernier. La double flèche 1 peut pivoter, comme il est connu en soi, grâce à une paire de vérins 13, à partir d'une position basse représentée sur la figure 1 jusqu'à une position haute représentée sur les figures 3 et 4 en passant par toutes les positions intermédiaires. L'extrémité libre 14 de la flèche 1 est munie de deux paliers alignés 16, qui portent un axe horizontal 17 parallèle à l'axe 15. Cet axe 17 sert à l'articulation d'un ensemble que l'on décrira maintenant en détail.

Un organe preneur 3 comprend un moyen de préhension 38 ayant un bâti 31 à la partie basse duquel est montée une fourche 39 à dents fixes 35 dirigées vers l'avant et à la partie supérieure duquel est articulée autour d'un axe 32 une mâchoire 33 portant des dents fixes 34, dirigées vers les dents 35, mais déplaçables, par l'effet du pivotement de la mâchoire 33, d'environ 45° autour d'une position intermédiaire dans laquelle les dents 35 et 34 sont dirigées mutuellement à angle droit. Les dents 35 et 34 sont relativement courtes et d'une longueur juste suffisante pour saisir efficacement une balle de paille ou de fourrage par fermeture du moyen de préhension 38. Un vérin 30, attelé, d'une part, à un levier 36 solidaire de la mâchoire 33 et, d'autre part, à un point fixe 37, permet d'ouvrir ou fermer à volonté le moyen de préhension 38 composé de la fourche 39 à dents 35 et de la mâchoire 33.

L'organe preneur 3 est réuni à la flèche 1 par l'intermédiaire d'un dispositif inclinable 2 qui est constitué dans cet exemple par un parallélogramme déformable 21 comprenant deux bielles parallèles 22 et 23 articulées chacune par une extrémité respectivement autour de deux axes 24 et 25 portés par le bâti 31 de l'organe preneur 3. A leur extrémité opposée les bielles 22 et 23 sont articulées respectivement autour de deux axes 26, 27 qui sont portés par un bras basculeur double 28. Ce dernier est dirigé vers le haut et articulé autour de l'axe 17 de l'extrémité 14 de la double flèche 1. Ce bras basculeur 28 peut basculer d'au moins 45° grâce à un vérin 40 attelé, d'une part, en 41 sur une traverse 4 de la flèche 1 et, d'autre part, en 42 sur le bras lui-même en un point écarté de l'axe 17.

De son côté, le parallélogramme déformable 21 peut être incliné et, en même temps, replié ou développé grâce à un vérin 29 attelé entre un point bas 43 du bras basculeur 28 et un point 44 de la bielle 23 écarté de son point d'articulation 27 sur le bras basculeur 28.

On remarquera que l'exemple de réalisation décrit ici est le plus évolué selon la conception de l'invention pour la raison que, non seulement l'appareil est pourvu du dispositif inclinable 2 mais, en outre, ce dernier est du type avantageux d'un parallélogramme articulé. Dans une variante plus simple, le dispositif inclinable serait articulé seulement sur le bras basculeur 28. La réalisation plus évoluée permet, en même temps qu'on incline le dispositif 2, d'obtenir un effet d'élévation de la charge parallèlement à elle-même.

Cet effet se verra clairement au cours de l'explication que l'on donnera maintenant du fonctionnement de l'appareil décrit plus haut, par exemple pour prendre au sol une balle de paille ou de fourrage et la placer sur un tas déjà constitué.

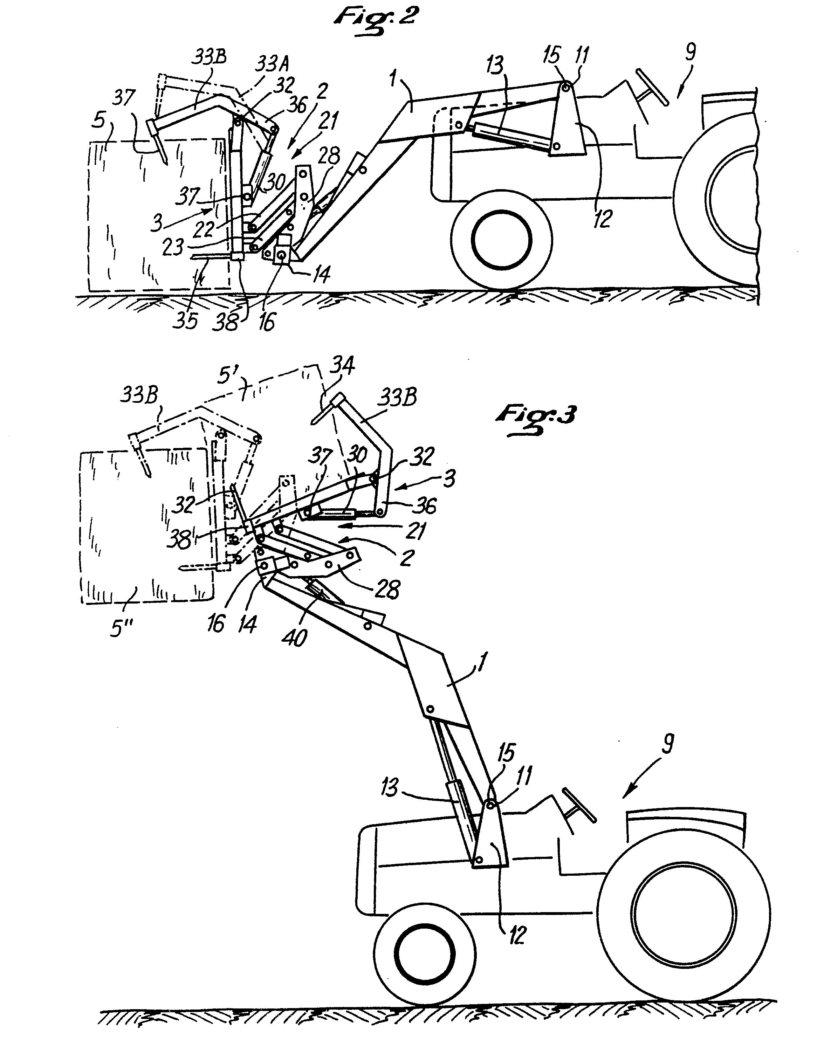

A la figure 2, on voit une balle 5 au sol, dans laquelle on a fait pénétrer les dents 32 en faisant avancer le tracteur 9 avec sa flèche 1 à une position voisine de la plus basse possible, le bras basculeur 28 étant en position repliée en arrière sur la flèche 1 et le parallélogramme 21 en position repliée qui correspond à la position basse du dispositif inclinable et élévateur 2. La mâchoire 33 étant d'abord en position ouverte 33A, on la ferme en 33B de façon que les dents 34 pénètrent par le haut dans la balle 5. A partir de cet instant, la balle est prise par l'appareil qui peut l'élever par relèvement de la flèche (figure 3) jusqu'en 5', position dans laquelle le bras basculeur et le dispositif inclinable ont gardé, par rapport à la flèche 1, la même position relative qu'à la figure 2; autrement dit, du seul fait du relèvement de la flèche 1, la balle a été renversée d'environ 60°. Selon les besoins on pourrait ne relever la flèche que partiellement. On fait alors basculer vers l'avant le bras basculeur 28, d'un angle égal à celui du relèvement actuel de la flèche, ce qui amène la balle de la position 5' à la position 5" dans laquelle elle est parallèle à la position où on l'a prise au sol. De cette position 5" à nouveau reprise à la figure 4, on peut l'élever jusqu'en 5''' (ou en toutes positions intermédiaires telle que 5'''') par action du vérin 29 sur le parallélogramme 21 du dispositif élévateur 2. Par déplacement du tracteur 9, on amène la balle en position 5''' à bonne hauteur sur le dessus du tas à élever, et, enfin, on ouvre la mâchoire 33 pour la ramener de sa position fermée 33B à sa position ouverte 33A. Il suffit ensuite de reculer le tracteur 9 pour lâcher la balle en bonne position. Il n'est pas nécessaire de décrire la manoeuvre inverse qui est évidente après ce qu'on vient d'expliquer.

# 0055186

## REVENDICATIONS

1. Appareil de manutention d'objets à gerber, portable par un tracteur, comprenant une flèche (1) mobile en inclinaison autour d'un axe horizontal (15), un bras basculeur (28) monté à l'extrémité de la flèche (1) autour d'un axe horizontal (17), un organe preneur (3) à mâchoires (33, 35) porté par le bras (28), caractérisé en ce que l'organe preneur (3) est porté par le bras basculeur (28) par l'intermédiaire d'un dispositif inclinable (2) qui est articulé autour d'un axe horizontal au moins sur le bras basculeur (28).

2. Appareil selon la revendication 1 caractérisé en ce que le dispositif inclinable (2) interposé entre le bras basculeur (28) et l'organe preneur (3) est un dispositif du type à parallélogramme déformable (21) articulé à la fois sur le bras basculeur (28) et sur l'organe preneur (3) lui conférant un effet élévateur de la charge parallèlement à elle-même.

3. Appareil selon la revendication 1 dans lequel l'organe preneur (3) à mâchoires (33, 35) comprend un bâti (31) ayant à son extrémité inférieure une fourche fixe (39) à dents (35) et à son extrémité supérieure une mâchoire (33) articulée à dents (34) caractérisé en ce que, dans une position intermédiaire de la course de la mâchoire articulée (33) les dents (35 et 34) de cette mâchoire et de la fourche (39) sont dans des plans perpendiculaires.

4. Appareil selon la revendication 2 caractérisé en ce que la mâchoire articulée (33) est articulée autour d'un axe (32) qui est parallèle à l'axe horizontal de pivotement (17) du bras basculeur (28) par rapport à la flèche (1) et parallèle aux axes horizontaux (26, 27, 24, 25) d'inclinaison du dispositif inclinable (2) par rapport au bras basculeur (28) et à l'organe preneur (3).

0055186

1/2

Fig.1

Fig.4

0055186

2/2

Fig. 2

Fig. 3

0055186

Office européen
des brevets

**RAPPORT DE RECHERCHE EUROPEENNE**

Numéro de la demande

EP 81 40 2055

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| D,A | GB - A - 2 048 820 (COGHLAN)<br><br>* page 1, colonne de droite, lignes 80-126; figures 4-6 * | 1 | A 01 D 87/08<br>87/00<br>B 66 F 9/065 |
| A | US - A - 3 647 099 (CARRIERE)<br><br>* colonne 2, ligne 8 à colonne 3, ligne 31; figures 1,2.* | 1 | |
| A | GB - A - 1 554 675 (CATERPILLAR TRACTOR CO.)<br><br>* page 2, colonne de droite, ligne 76 à page 3, colonne de gauche, ligne 21; figure 4 * | 1,2 | **DOMAINES TECHNIQUES RECHERCHES (Int. Cl. 3)**<br><br>A 01 D<br>E 02 F<br>B 66 F |
| A | GB - A - 2 045 048 (KLEF)<br><br>* page 4, ligne 104 à page 5, ligne 98; figures 1-5 * | 1,2 | |
| A | GB - A - 955 047 (HODGKINSON)<br><br>* figure 1 * | 3 | **CATEGORIE DES DOCUMENTS CITES** |

| Y | Le présent rapport de recherche a été établi pour toutes les revendications | | |
|---|---|---|---|
| Lieu de la recherche | Date d'achèvement de la recherche | Examinateur | |
| La Haye | 23-03-1982 | MARTIN | |

OEB Form 1503.1  06.78